# EUROPÄISCHE PATENTSCHRIFT

(11) **EP 0 866 836 B1**
(45) Veröffentlichungstag und Bekanntmachung des Hinweises auf die Patenterteilung: **25.08.1999**
(21) Anmeldenummer: 96943923.1
(22) Anmeldetag: 12.12.1996
(51) Int. Cl.: C08L 15/00, C08K 5/098

(54) **ANTRIEBSRIEMEN**
DRIVE BELT
COURROIE DE TRANSMISSION

(30) Priorität: 15.12.1995 DE 19547025
(43) Veröffentlichungstag der Anmeldung: 30.09.1998
(73) Patentinhaber: ContiTech Antriebssysteme GmbH, 30165 Hannover (DE)
(72) Erfinder: HERRMANN, Wolfram, D-31515 Wunstorf (DE)
(74) Vertreter: Schneider, Egon
(86) Internationale Anmeldenummer: EP9605546
(87) Internationale Veröffentlichungsnummer: WO9722663

(56) Entgegenhaltungen:
- EP-A- 0 704 480
- DE-A- 3 918 929
- DE-A- 4 309 893
- US-A- 4 713 409

## Beschreibung

Die Erfindung betrifft einen Antriebsriemen mit im wesentlichen einer elastomeren Decklage, Festigkeitsträgern und einem elastomeren Grundkörper.

An Antriebsriemen werden unterschiedlichste Anforderungen gestellt. So müssen sie z.B. einer hohen dynamischen Beanspruchung standhalten, gute Alterungsbeständigkeit und einen geringen Abrieb aufweisen. Einen entscheidenden Einfluß auf diese Eigenschaften hat die elastomere Matrix (Decklage, Grundkörper) des Antriebsriemens. Für den Einsatz in Antriebsriemen sind Kautschukmaterialien auf der Basis von Ethylen-Propylen-Copolymer(EPM)/Ethylen-Propylen-Dien-Copolymer(EPDM) und hydrierten Nitrilkautschuk Stand der Technik. So sind in der DE 39 18 929 Kautschukmischungen für Gurte, Walzen und Schläuche bekannt, die 10 - 40 Gewichtsprozent Ethylen-Propylen-Copolymerisat-Kautschuk und 90 - 60 Gewichtsprozent hydrierten Nitrilkautschuk enthalten. Diese Kautschukmischungen sind aber für Antriebsriemen, die eine besondere Kälteflexibilität aufweisen müssen, nicht geeignet. Es sind Möglichkeiten bekannt, die Kälteflexibilität durch Zugabe von speziellen Weichmachern zu verbessern. Damit wird eine Erniedrigung der Glastemperatur des Kautschuks erreicht und damit auch das Kälteverhalten angehoben. Nachteilig dabei ist allerdings, daß die Weichmacher um so flüchtiger sind, je größer die Absenkung der Glastemperatur zu beobachten ist, so daß eine Anhebung der Kälteflexibilität nicht über die gesamte Lebensdauer des Riemens anhält. Darüberhinaus können Weichmacher nur in relativ geringen Konzentrationen für Antriebsmaterialien eingesetzt werden (extremer Abfall der Festigkeit), so daß eine Verbesserung der Kälteflexibilität durch Zugabe von Weichmachern aus diesem Grunde prinzipiell nur um wenige Grad erreicht werden kann. Weiterhin ist in der WO 96/13544 eine Kautschukmischung für Antriebsriemen offenbart, dessen elastomere Zusammensetzung mindestens aus 50 Gewichtsprozent EPM oder EPDM besteht. Des weiteren haben diese Antriebsriemen den Nachteil, daß sie ein hohes Quellungsverhalten bei dem Kontakt mit Öl aufweisen. Für viele Anwendungen, z. B. im KFZ-Bereich, werden aber hohe Anforderungen an die Ölbeständigkeit gestellt, um eine möglichst hohe Betriebslaufzeit des Riemens zu gewährleisten. Ein hohes Ölquellungsverhalten des Riemens bewirkt nämlich einen erhöhten Abrieb, einen hohen Festigkeitsverlust und eine veränderte Riemengeometrie, was letztendlich zu einem frühzeitigen Riemenausfall führt.

Der Erfindung liegt die Aufgabe zugrunde, Antriebsriemen bereitzustellen, die eine gute Kälteflexibilität aufweisen und gleichzeitig eine geringe Ölquellung verzeichnen.

Gelöst wird diese Aufgabe erfindungsgemäß dadurch, daß die Decklage und/oder der Grundkörper aus einer peroxydisch vernetzten Elastomermischung besteht, die bezogen auf 100 Teile Kautschuk 41 - 49 Teile Ethylen-Propylen-Dien-Copolymerisat (EPDM) und/oder Ethylen-Propylen-Copolymerisat (EPM) sowie 59 - 51 Teile hydrierten Nitrilkautschuk (H-NBR) enthält und weitere Bestandteile, wie Weichmacher und Füllstoffe aufweist, und daß die Elastomermischung zumindest ein Metallsalz eines α , β- ungesättigten Carbonsäurederivates in einer Menge von 5 bis 80,5 Teile enthält.

Das für die erfindungsgemäße Herstellung des Antriebsriemens verwendete Ethylen-Propylen-Copolymerisat kann einen Ethylen-Anteil von 30 - 80 Gewichtsprozent aufweisen. Bei Einsatz eines Ethylen-Propylen-Dien-Copolymerisates soll der Ethylen-Gehalt zwischen 30 bis 80 Gewichtsprozent, bevorzugt zwischen 50 und 60 Gewichtsprozent, betragen. Der Dien-Anteil soll bei < 10 Gewichtsprozent, bevorzugt 5 - 7 Gewichtsprozent, liegen. Als Dien werden nichtkonjugierte Verbindungen, wie z.B. 1,4-Hexadien, Dicyclopentadien, Ethylidennorbornen, Methylennorbornen oder Methyltetrahydroinden verwendet. Dabei ist es unerheblich, nach welchem Herstellungsverfahren das EPDM bzw. EPM hergestellt wurde. Als bevorzugt soll EPDM eingesetzt werden, da dieser Kautschuk im Vergleich zu EPM geringere Mengen an Peroxid zur Vernetzung benötigt und damit im Antriebsriemen höhere Festigkeiten und auch ein geringer Abrieb erzielt wird. Als H-NBR-Kautschuke sollen die aus dem Stand der Technik bekannten zum Einsatz kommen. Dabei soll der Restdoppelbindungsanteil zwischen 0 und 30 %, bevorzugt zwischen 0 und 15 %, liegen. Der Vorteil eines geringeren Restdoppelbindungsanteil (0 - 15 %) ist eine bessere Alterungsbeständigkeit. Der Acrylnitril-Gehalt im H-NBR soll höchstens 50 Gewichtsprozent betragen, wobei niedrigere Acrylnitril-Anteile eine bessere Dynamik des Riemens mit sich bringen.

Es sollen Metallsalze (z.B. Aluminium, Magnesium, Kalzium, Zink) von α , β - ungesättigten Carbonsäurederivaten, wie z.B. der Methacrylsäure, Dimethacrylsäure, Acrylsäure und bevorzugt das Zinksalz von Acrylsäurederivaten zum Einsatz kommen. Der Anteil dieses Metallsalzes (5 bis 80,5 Teile) hat sich vorteilhaft erwiesen, da bei geringeren Konzentrationen (< 5 Teile) keine ausreichend gute Beeinflussung der Ölquellung zu verzeichnen ist und höhere Konzentrationen (> 80,5 Teile) die dynamische Tüchtigkeit des Antriebsriemen herabsetzen. Insbesondere das Zinksalz von Acrylsäurederivaten hat positiven Einfluß auf das Ölquellungsverhalten des Riemens, auf den Abrieb und auch auf die Haftung zu den Festigkeitsträgern. Als Zinksalze des Acrylsäurederivates kommen bevorzugt Zinkdiacrylat und/oder Zinkdimetacrylat zum Einsatz. Als Peroxide werden aus dem Stand der Technik übliche Substanzen, wie z.B. Dicumylperoxid in bekannten Konzentrationen (1 - 10 Teile) verwendet. Auch können weitere Bestandteile, wie Stabilisatoren, Farbstoffe und Vernetzungshilfsmittel in der erfindungsgemäßen Mischung für Antriebsriemen enthalten sein.

Durch die Kombination von 41 - 49 Teile EPDM und/oder EPM und 59 - 51 Teile hydrierten Nitrilkautschuk sowie 5 - 80,5 Teile eines Zinksalzes eines Acrylsäurederivates werden erfindungsgemäß Antriebsriemen erzielt, die einerseits eine hervorragende Kälteflexibilität und andererseits eine geringe Ölquellung aufweisen. Insbesondere die verbesserte Kälteflexibilität war aufgrund von dynamisch mechanischen Messungen nicht zu erwarten, da bei den erfindungsgemäßen Materialien zwei Glasübergangszustände (- 22° C bzw. - 38 ° C) zu finden sind. Normalerweise führt eine Unterschreitung von einem der beiden Glasübergangszustände zur Versprödung des Materials und damit zum sofortigen Riemenbruch. Das erfindungsgemäße Material für Antriebsriemen offenbart eine Variante ohne Zugabe von zusätzlichen Hilfsmitteln (spezielle Weichmacher), die Kälteflexibilität zu verbessern. Es hat sich dabei gezeigt, daß bei geringerem EPDM/EPM-Gehalten (<41-Teile) eine geringere Kälteflexibilität und auch eine geringere dynamische Belastbarkeit des Riemens zu verzeichnen war. Wenn mehr als 49 Teile EPDM/EPM in der Kautschukmischung für Antriebsriemen verwendet wurden, wies dieser Riemen eine erhöhte Ölquellung auf. Da Kälteflexibilität und Ölquellungsvermögen wesentlich über das Einsatzgebiet des Riemens entscheidend sind, ist diese erfindungsgemäße Eigenschaftsoptimierung von besonderen Interesse.

Weiterhin ist vorteilhaft, wenn als Weichmacher polare Weichmacher eingesetzt werden, da diese eine bessere Haftung zum Festigkeitsträger aufweisen und damit eine höhere Lebensdauer des Antriebsriemens bewirken. Der positive Einfluß des polaren Weichmachers (z.B. Ester-Weichmacher) auf die Eigenschaften des Antriebsriemens waren nicht zu erwarten, da EPDM und auch H-NBR eher zu den unpolaren Polymeren zählen. Vorteilhaft sind Weichmachermengen von 0 - 30 Teilen in Verbindung mit einem Gesamtfüllstoffanteil (Summe aller Füllstoffe, also z.B. Ruß und weiße Füllstoffe) von 0 - 60 Teilen. Diese Kombination hat sich bewährt, da die Antriebsriemen einen geringen Abrieb und gleichzeitig eine gute Dynamik aufweisen. Als weiße Füllstoffe können z.B. Silicate, Oxide oder Salze von Metallen (Aluminium, Zink, Magnesium, Kalzium) verwendet werden.

Von besonderem Vorteil ist, wenn die Decklage und/oder der Grundkörper anorganische und/oder organische Kurzfasern enthält. Darunter können sämtliche natürliche oder synthetische Materialien gefaßt werden, wie z.B. Polyester, Aramid, Viscose, Zellulose, Glas. Insbesondere eine Länge von 1 bis 6 mm wirkt sich positiv auf die mechanischen Eigenschaften (höhere Festigkeit) des Antriebsriemens aus. Die Menge an eingemischten Kurzfasern soll vorzugsweise 1 - 10 Teile betragen.

Der Antriebsriemen, der die erfindungsgemäße Gummimischung aufweist, kann z.B. ein Keilrippenriemen, ein Zahnriemen oder auch ein Keilriemen sein. Insbesondere für Keilrippenriemen, die dynamisch sehr belastbar sein müssen, hat sich herausgestellt, daß 5 - 30 Teile des Zinksalzes des Acrylsäurederivates von besonderem Vorteil sind. Für Zahnriemen, die eine hohe mechanische Beständigkeit besitzen müssen, haben sich 20 - 40 Teile des Zinksalzes des Acrylsäurederivates als positiv erwiesen. Wenn aber Zahnriemen nicht allzu großen dynamischen Belastungen ausgesetzt werden, wie z.B. bei niedrigen Drehzahlen, können höhere Zinksalzmengen, vorzugsweise 50 - 80,5 Teile, verwendet werden. Bei diesen Gehalten des Zinksalzes des Acrylsäurederivates wird eine höhere Härte des Zahnriemens bewirkt, der ein besseres Kraftübertragungsvermögen mit sich bringt. Außerdem wird der Abrieb dieses Zahnriemens verringert.

Im Folgenden wird ein Ausführungsbeispiel näher erläutert:

In Tabelle 1 ist eine erfindungsgemäße Kautschukmischung B im Vergleich zu herkömmlichen Kautschukmischungen für Keilrippenriemen angegeben.

**Tabelle 1**

| | A | B | C | D |
|---|---|---|---|---|
| EPDM | 30 | 42 | 48 | 60 |
| H-NBR | 70 | 58 | 52 | 40 |
| Zn-diacrylat | 25 | 25 | 25 | 25 |
| pol. Weichmacher (TOTM) | 7 | 7 | 7 | 7 |
| Ruß N 550 | 25 | 25 | 25 | 25 |
| Dicumylperoxid | 5 | 5 | 5 | 5 |
| weiße Füllstoffe (ZnO) | 10 | 10 | 10 | 10 |
| | | | | |
| Eigenschaften | | | | |
| Volumenzunahme bei Ölkontakt 24h, 100°C [Vol.-%] | 7 | 12 | 15 | 27 |
| Riemenlauf bei - 40°C | defekt | o.k. | o.k. | o.k. |

Ein Vergleich des erfindungsgemäßen Riemens, dessen Decklage und Grundkörper aus der Mischung B bzw. C gebildet sind, in der Ölquellung mit dem entsprechenden Riemen D zeigt, daß ein Riemen mit einem hohen EPDM-Anteil eine hohe Ölquellung aufweist. Der angegebene Wert des Riemens D bedeutet, daß der Riemen nicht mehr lauffähig ist. Die erfindungsgemäßen Riemen B und C weisen eine deutlich geringere Ölquellung auf. Diese geringe Ölquellung war nicht vorhersehbar, da im allgemeinen in Polymerverschnitten aufgrund der Verteilung der Kautschukphasen eine wesentlich höhere Ölquellung im Vergleich zu den einzelnen Komponenten (EPDM bzw. H-NBR) zu erwarten war.In der Untersuchung der Kälteflexibilität wurde außerdem festgestellt, daß der erfindungsgemäße Riemen bis - 40° C noch eine hervorragende Dynamik aufweist. Diese Tatsache war überraschend, denn obwohl der überwiegende Kautschukanteil in der Mischung H-NBR ist und dieses Polymer eine relativ hohe Glastemperatur (ca. - 22°C) besitzt, werden erfindungsgemäß Riemen erzielt, die bis - 40°C eingesetzt werden können. Da insbesondere im KFZ-Bereich ein Riemen keinen tieferen Temperaturen ausgesetzt ist, kann auf höhere EPDM-Gehalte verzichtet werden. Darüberhinaus wird das dynamische Verhalten durch den erfindungsgemäß verwendeten EPDM/EPM-Anteil auch bei höheren Temperaturen positiv beeinflußt. Die erfindungsgemäßen Mischungen für Antriebsriemen weisen eine Rückprallelastizität bei Raumtemperatur von > 45% auf, wobei hingegen Mischungen, die 10 - 40 Teile EPDM/EPM in Verbindung mit H-NBR enthalten, eine Rückprallelastizität verweisen, die zwischen 35 und 40 % liegt. Dies erklärt also, daß der erfindungsgemäße Riemen einen geringeren Wärmeaufbau unter dynamischer Belastung zeigt und demzufolge sich auch dadurch seine Lebensdauer verlängert.

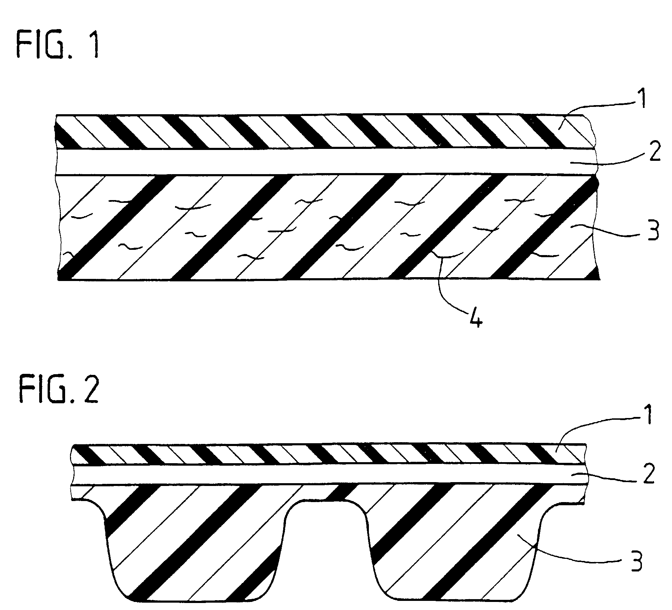

Des weiteren soll anhand einer schematischen Zeichnung die Erfindung näher erläutert werden. Es zeigt Figur 1 einen Keilrippenriemen im Längsschnitt und Figur 2 einen Zahnriemen im Längsschnitt. Beide Figuren zeigen Antriebsriemen mit einer Decklage 1 aus elastomerem Material, Festigkeitsträger 2 und einem elastomerem Grundkörper 3. Prinzipiell können sie auch ein nichtdargestelltes Ummantelungsgewebe aufweisen.

Die elastomere Matrix der Figuren 1 und 2 (Decklage 1 und Grundkörper 3) bestehen aus der Kautschukmischung B. Prinzipiell ist es aber auch möglich, daß die Decklage 1 oder der Grundkörper 3 aus der erfindungsgemäßen Mischung B besteht. Die Festigkeitsträger 2 bestehen in der Figur 1 aus Polyester und in der Figur 2 aus Glas. Der Grundkörper 3 der Figur 1 enthält Kurzfasern 4 aus z.B.Polyester mit einer Länge von ca. 4 mm. Diese Kurzfasern verleihen dem Riemen eine höhere Festigkeit, einen geringen Abrieb und außerdem ein verbessertes Geräuschverhalten.

Diese erfindungsgemäßen Antriebsriemen weisen, wie in Tabelle 1 ersichtlich, eine hervorragende Kälteflexibilität auf und zeigen eine geringe Ölquellung. Es können nun insbesondere kälteflexible Riemen bereitgestellt werden, die kostengünstiger sind als bekannte Riemen, die z.B. nur aus speziellen H-NBR-Kautschuk gefertigt sind. Wenn diese H-NBR-Typen für die erfindungsgemäßen Abtriebsriemen verwendet werden, kann eine weitere Verbesserung der Kälteflexibilität erzielt werden. Beide Eigenschaften (Ölquellung, Kälteverhalten) haben den Vorteil, daß das Anwendungsgebiet des jeweiligen Riemens verbreitert werden kann.

## Patentansprüche

1. Antriebsriemen mit im wesentlichen einer elastomeren Decklage, Festigkeitsträgern und einem elastomeren Grundkörper,
**dadurch gekennzeichnet,**
daß die Decklage und/oder der Grundkörper aus einer peroxydisch vernetzten Elastomermischung besteht, die bezogen auf 100 Teile Kautschuk 41 - 49 Teile Ethylen-Propylen-Dien-Copolymerisat (EPDM) und/oder Ethylen-Propylen-Copolymerisat (EPM) sowie 59 - 51 Teile hydrierten Nitrilkautschuk (H-NBR) enthält und weitere Bestandteile, wie Weichmacher und Füllstoffe aufweist, und daß die Elastomermischung zumindest ein Metallsalz eines α , β-ungesättigten Carbonsäurederivates in einer Menge von 5 bis 80,5 Teile enthält.

2. Antriebsriemen nach Anspruch 1, dadurch gekennzeichnet, daß das Metallsalz des α , β- ungesättigten Carbonsäurederivates das Zinksalz eines Acrylsäurederivates ist.

3. Antriebsriemen nach Anspruch 1, dadurch gekennnzeichnet, daß die Elastomermischung einen polaren Weichmacher aufweist.

4. Antriebsriemen nach Anspruch 2, dadurch gekennzeichnet, daß der Anteil des polaren Weichmachers zwischen 0 und 30 Teilen und der Anteil der gesamten Füllstoffe zwischen 0 und 60 Teilen liegt.

5. Antriebsriemen nach zumindest einem der vorhergehenden Ansprüche, dadurch gekennzeichnet, daß die Decklage und/oder der Grundkörper anorganische und/oder organische Kurzfasern mit einer Länge von 1 bis 6 mm enthält.

6. Antriebsriemen nach Anspruch 5, dadurch gekennzeichnet, daß der Anteil der Kurzfasern 1 bis 10 Teile beträgt.

7. Keilrippenriemen nach zumindest einem der vorhergehenden Ansprüche, dadurch gekennzeichnet, daß der Keilrippenriemen 5 bis 30 Teile des Zinksalzes des Acrylsäurederivates aufweist.

8. Zahnriemen nach zumindest einem der Ansprüche 1 bis 6, dadurch gekennzeichnet, daß der Zahnriemen 50 bis 80,5 Teile des Zinksalzes des Acrylsäurederivates aufweist.

9. Zahnriemen nach zumindest einem der Ansprüche 1 bis 6, dadurch gekennzeichnet, daß der Zahnriemen 20 bis 40 Teile des Zinksalzes des Acrylsäurederivates aufweist.

## Claims

1. Drive belt, having substantially one elastomeric cover ply, reinforcing members and one elastomeric basic body, characterised in that the cover ply and/or the basic body are/is formed from a peroxide-cross-linked elastomeric mixture which contains, relative to 100 parts rubber, 41 - 49 parts ethylene-propylene-diene copolymer (EPDM) and/or ethylene-propylene copolymer (EPM) and 59 - 51 parts hydrogenated nitrile rubber (H-NBR), and additional constituent ingredients, such as plasticizers and filler substances, and in that the elastomeric mixture contains at least one metal salt of an α,β-unsaturated carboxylic acid derivative in a quantity of 5 to 80.5 parts.

2. Drive belt according to claim 1, characterised in that the metal salt of the α,β-unsaturated carboxylic acid derivative is the zinc salt of an acrylic acid derivative.

3. Drive belt according to claim 1, characterised in that the elastomeric mixture has a polar plasticizer.

4. Drive belt according to claim 2, characterised in that the proportion of the polar plasticizer is between 0 and 30 parts, and the proportion of the entire filler substances is between 0 and 60 parts.

5. Drive belt according to at least one of the preceding claims, characterised in that the cover ply and/or the basic body contain/contains inorganic and/or organic short fibres having a length of 1 to 6 mm.

6. Drive belt according to claim 5, characterised in that the proportion of the short fibres is 1 to 10 parts.

7. V-ribbed belt according to at least one of the preceding claims, characterised in that the V-ribbed belt has 5 to 30 parts of the zinc salt of the acrylic acid derivative.

8. Toothed belt according to at least one of claims 1 to 6, characterised in that the toothed belt has 50 to 80.5 parts of the zinc salt of the acrylic acid derivative.

9. Toothed belt according to at least one of claims 1 to 6, characterised in that the toothed belt has 20 to 40 parts of the zinc salt of the acrylic acid derivative.

## Revendications

1. Courroie d'entraînement qui comprend essentiellement une couche extérieure élastomère, des supports de résistance et un corps de base élastomère,
caractérisée en ce que
la couche extérieure et/ou le corps de base se compose d'un mélange d'élastomère à réticulation peroxydique, qui contient, pour 100 parties de caoutchouc, 41 à 49 parties d'un copolymérisat d'éthylène propylène diène (EPDM) et/ou d'un copolymérisat éthylène-propylène (EPM) et 59 à 51 parties de caoutchouc nitrile hydruré (H-NBR) et d'autres composants comme des plastifiants et des charges, et en ce que le mélange élastomère contient au moins une quantité de 5 à 80,5 parties d'un sel métallique d'un dérivé α, β non saturé de l'acide carbonique.

2. Courroie d'entraînement selon la revendication 1, caractérisée en ce que le sel métallique du dérivé α, β non saturé de l'acide carbonique est le sel de zinc d'un dérivé de l'acide acrylique.

3. Courroie d'entraînement selon la revendication 1, caractérisée en ce que le mélange d'élastomère comporte un plastifiant polaire.

4. Courroie d'entraînement selon la revendication 2, caractérisée en ce que la teneur en plastifiant polaire est comprise entre 0 et 10 parties et la teneur en charge totale est comprise entre 0 et 60 parties.

5. Courroie d'entraînement selon l'une au moins des revendications précédentes, caractérisée en ce que la couche extérieure et/ou le corps de base contient de courtes fibres inorganiques et/ou organiques d'une longueur de 1 à 6 mm.

6. Courroie d'entraînement selon la revendication 5, caractérisée en ce que la teneur en fibres courtes est de 1 à 10 parties.

7. Courroie trapézoïdale à nervures selon l'une au moins des revendications précédentes, caractérisée en ce que la courroie trapézoïdale à nervures comporte 5 à 30 parties du sel de zinc du dérivé de l'acide acrylique.

8. Courroie dentée selon l'une au moins des revendications 1 à 6, caractérisée en ce que la courroie dentée comporte 50 à 80,5 parties du sel de zinc du dérivé de l'acide acrylique.

9. Courroie dentée selon l'une au moins des revendications 1 à 6, caractérisée en ce que la courroie dentée comporte 20 à 40 parties du sel de zinc du dérivé de l'acide acrylique.
